# EUROPEAN PATENT APPLICATION

(11) **EP 4 002 101 A1**
(43) Date of publication of application: **25.05.2022**
(21) Application number: 21275165.5
(22) Date of filing: 23.11.2021
(51) Int. Cl.: G06F 8/71, G06F 9/445, G06F 40/35, H04L 51/02, G06F 8/34

(54) **COMPUTER IMPLEMENTED SOFTWARE MODIFICATION SYSTEM AND METHOD**

(30) Priority: 23.11.2020 GB 202018406
(71) Applicant: AutomatePro Limited, London, Greater London WC2N 5BW (GB)
(72) Inventor: Chorley, Paul, Torquay (GB); Devonald, Wayne, Torquay (GB)
(74) Representative: Williams Powell

(57) **Abstract**

A computer-implemented software modification method and system are disclosed. The method comprises accessing, from a data repository, definition data defining an aspect of a computer software system, the definition data being used during execution of the computer software system, the aspect comprising one or more of functionality and visual appearance of the computer software system, automatically generating a user interface in dependence on the definition data, executing the user interface and receiving, from a user, modification instructions for the aspect of the computer software system, and generating, from the modification instructions, changes to the computer software system.

## Description

### Cross reference to related applications

This application is based on and claims priority to Great Britain Patent Application Serial No. 2018406.5 filed on November 23, 2020 which is hereby incorporated by reference as if set for in its entirety herein.

### Field of the Invention

The present invention relates to a software modification system and method and in particular to a user-friendly system that enables a user to effect changes to a software program or system.

### Background to the Invention

In recent years, the rapid uptake of Software as a Service (SaaS) and Platform as a Service (PaaS) in corporations has meant that customised business software platforms can be quickly implemented. Corporations purchase subscriptions to use SaaS and PaaS solutions, which they configure to their business needs. Often, teams of analysts, consultants or programmers are involved the configuration, even when only small amendments are made to the base features or workflows in the product to meet the corporation's exact needs.

Configuration of SaaS and PaaS solutions means altering the behaviour of the platform without having a developer write lines of code e.g. Javascript, C# etc.

Instead, configuration of these platforms is done using wizard style' selections and options which can be made by a less technical user without code developer skills. However, without a deeper insight into the platform and workflows, lay users are unaware of the implications of changes they make.

SaaS and PaaS vendors want to restrict the amount of configuration that can be made to their platforms, in order to minimise the cost and time to upgrade each of their customers to the next version of their software. The limitation of the amount of configuration that can be achieved by a customer of a SaaS/PaaS solution, means that there are less configuration options than would be available if writing 'raw software code'.

On the other hand, modification is attractive to users because these systems can be more closely tailored to a business' needs without significant expenditure and external involvement.

### Statement of Invention

According to an aspect of the present invention, there is provided a computer-implemented software modification method comprising: accessing, from a data repository, definition data defining an aspect of a computer software system, the definition data being used during execution of the computer software system, the aspect comprising one or more of functionality and visual appearance of the computer software system;
automatically generating a user interface in dependence on the definition data;
executing the user interface and receiving, from a user, modification instructions for the computer software system; and,
generating, from the modification instructions, changes to the computer software system.

The method may include pre-processing the computer software system to identify a plurality of aspects, providing a user interface to the user to select one of the aspects for modification.

The step of generating a user interface may comprise configuring a natural language chat-bot to guide the user through modification of the aspect.

The modification instructions may be automatically applied to the computer software system to effect the changes or they may be communicated to an administrator or administration system for approval. Alternatively, the modification instructions may be communicated to a developer or other party to be implemented.

Preferred embodiments are directed to systems and method in which a dynamically generated user interface acts as an intermediary between a user and a computer software system. Preferably, the user interface acts as a technical translator, offering the user user-understandable choices and translating selected choices into technical instructions that can be effected on the computer software system (preferably automatically). The user interface preferably accepts user inputs in natural language and/or simplified inputs that makes the underlying detail such a database rows and columns and executed routines transparent to the user.

Preferably, the user interface and/or the modification instructions are configured to alert when the changes cause changes to, or failure of, functionality elsewhere in the computer software system. Optionally, the user may be prompted to resolve failure of functionality or approve the changes to functionality elsewhere via the user interface before the changes are effected.

Optionally, the user may be able to pause modification via the user interface and resume at a later date and/or access prior changes and roll the changes back.

According to a preferred aspect of the present invention, there is provided a computer-implemented software modification method comprising:
accessing, from a data repository, definition data defining an aspect of a computer software system, the definition data being used during execution of the computer software system, the aspect comprising one or more of functionality and visual appearance of the computer software system;
automatically generating a user interface in dependence on the definition data;
executing the user interface and receiving, from a user, modification instructions for the aspect of the computer software system; and, generating, from the modification instructions, changes to the computer software system.

The computer implemented method may further comprise pre-processing the computer software system to identify a plurality of the aspects, the user interface being configured to receive a selection from a user selecting one of the aspects for modification.

The step of generating the user interface may comprise configuring a natural language chat-bot to guide the user through modification of the aspect.

The step of generating the user interface may further comprise accessing a natural language database and populating natural language queries from the database with the definition data to generate a user interface in user understandable natural language.

The natural language queries may comprise questions and a decision tree for follow on questions to be posed to the user.

The computer implemented method may further comprising building a change request over time including storing changes requested via the user interface, highlighting information needed to make the requested change and inhibiting an option in the user interface to make the changes until all needed information has been provided.

The computer implemented method may further comprise displaying, via the user interface a simulation of the changes requested and seeking approval, via the user interface, of the simulated changes.

The computer implemented method may further comprise alerting the user, via the user interface, when the changes cause changes to, or failure of, functionality elsewhere in the computer software system.

The computer implemented method may further comprise storing, in a change database, the changes made to the computer system, the step of generating a user interface including displaying the changes from the change database and providing a user control to pause or roll back a change selected from the changes displayed from the change database.

According another aspect of the present invention, there is provided a computer implemented software modification system comprising:
a data repository interface configured to access a data repository encoding definition data defining an aspect of a computer software system, the definition data being used during execution of the computer software system, the aspect comprising one or more of functionality and visual appearance of the computer software system;
a processor configured to execute computer program code for executing a software modification system, including:
   computer program code configured to automatically generate a user interface in dependence on the definition data;
   computer program code configured to execute the user interface and receive, from a user, modification instructions for the aspect of the computer software system; and,
   computer program code configured to generate, from the modification instructions, changes to the computer software system.

The computer implemented software modification system may further comprise computer program code configured to pre-process the computer software system to identify a plurality of the aspects, and computer program code configured to receive a selection from a user selecting one of the aspects for modification.

The computer implemented software modification system may further comprise computer program code configured to generate a natural language chat-bot to guide the user through modification of the aspect.

The computer implemented software modification system may further comprise computer program code configured to access a natural language database and populate natural language queries from the database with the definition data to generate the user interface in user understandable natural language.

The natural language queries are preferably stored in the natural language database as a decision tree of template questions to be populated from the definition data and to be posed to the user.

The computer implemented software modification system may further comprise computer program code configured to build a change request over time, to store changes requested via the user interface, highlight information needed to make the requested change and inhibit an option in the user interface to make the changes until all needed information has been provided.

The computer implemented software modification system may further comprise computer program code configured to display, via the user interface a simulation of the changes requested and seek approval, via the user interface, of the simulated changes.

The computer implemented software modification system may further comprise computer program code configured to alert the user, via the user interface, when the change cause changes to, or failure of, functionality elsewhere in the computer software system.

The computer implemented software modification system may further comprise a change database storing prior changes made to the computer system using the software modification system, computer program code further comprising computer program code configured to generate a user interface displaying the changes from the change database and provide a user control to pause or roll back a change selected from the changes displayed from the change database.

Embodiments of the present invention seek to leverage automated understanding of computer software systems (and in particular PaaS and SaaS type systems) to turn requirements capture and implementation into an computer guided process that may include with a pre-defined questions and follow-up questions. One possible output of computer-guided modification analysis is a detailed and all-encompassing Functional and Non-functional Requirements Specification document in a consistent format, removing the problems experienced downstream in the SDLC of poorly defined requirements.

### Brief Description of the Drawings

Figure 1 is a schematic diagram of a software modification system according to one embodiment;
Figure 2 is the schematic diagram of Figure 1 illustrating selected features in greater detail;
Figure 3 is a screen shot of part of a user interface;
Figure 4 is flow diagram illustrating part of a template for use in generating a user interface according to an embodiment; and,
Figure 5 is flow diagram illustrating part of a process for use in generating a user interface according to another embodiment.

### Detailed Description

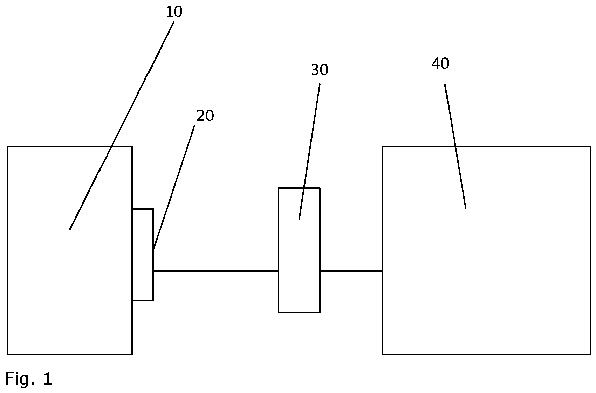

Figure 1 is a schematic diagram of a software modification system according to one embodiment.

The software modification system 10 includes an interface 20 that accesses, from a data repository 30, definition data defining an aspect of a computer software system 40.

The definition data is used during execution of the computer software system 40. The aspect comprising one or more of functionality and visual appearance of the computer software system.

It will be appreciated that the aspects that may be defined/modified are dependent on implementation and on the underlying computer software system 40 but can vary in complexity and are substantially endless. For example, the aspect may define fields displayed and inputs received from a user interface window/dialog, it may define how the system reacts to a failed database lookup, what happens when a button is pressed in a user interface, what happens when a counter (such as available stock) drops below a predetermined threshold in a database, etc.

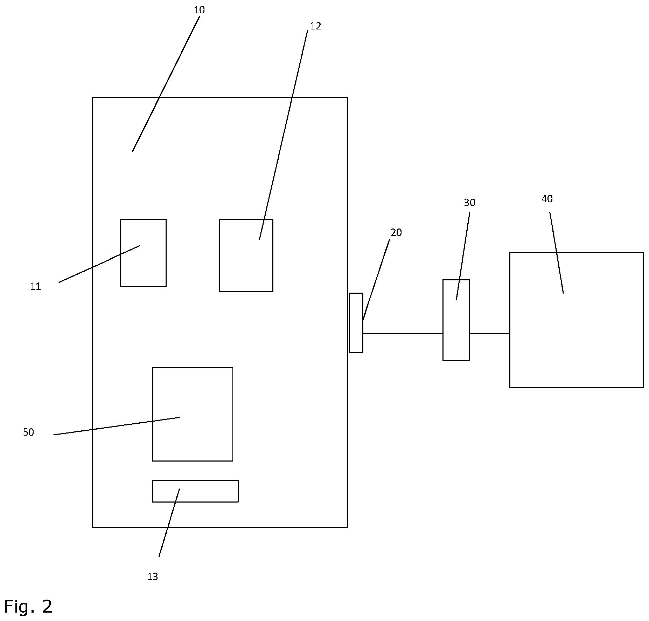

As shown in Figure 2, the software modification system is preferably executed by a processor 11 and a memory 12 or other data store, the processor executing computer program code from the memory 12 to automatically generate a user interface 50 in dependence on the definition data in the data repository 30.

Execution of the computer program code causes output of the user interface 50 which is configured to receive, from a user 60, modification instructions for the computer software system 40.

The software modification system 10 further includes computer program code that, when executed by the processor 11 from the memory 12 generates, from the modification instructions, changes to the computer software system 40.

It will be appreciated that typical computer software systems 40 such as SaaS and PaaS systems are/can be made complex and may encompass many aspects. Preferred embodiment guide the user through selection of the relevant aspects - in one embodiment the user is asked what he or she wishes to change and the system 10 may suggest relevant aspects (or at least drill down the aspects available to those more likely to be relevant).

The system 10 may be a part of the computer software system 40 or it may be independent. It may optionally be hosted remotely and access the computer software system 40 as needed.

For example, the system 10 may pre-process the computer software system (for example by accessing a database of the definition data and identifying sub-systems and modifiable parameters) to identify a plurality of aspects. These can then be provided via a user interface to the user to select one of the aspects for modification.

The user interface 50 may comprise a natural language chat-bot, a wizard style GUI or similar system. Preferably, the user interface 50 guides the user through modification of the aspect. Preferably, the user interface 50 access the definition data transparently and translates the data and implications of changing it into user understandable language.

In one embodiment, templates and/or a natural language database is referenced to translate the definition data into the user interface.

Modification instructions are preferably automatically applied to the computer software system 40 as described below to effect the changes. They may be communicated to an administrator or administration system for approval before being effected. The system 10 may include a trigger or similar mechanism that will allow changes that do not have implications elsewhere (upstream or downstream) to be automatically effected but require administrator approval otherwise. In an alternative embodiment, the modification instructions may be communicated to a developer or other party to be implemented.

Preferably, the user interface 50 and/or the modification instructions are configured to alert when the changes cause changes to, or failure of, functionality elsewhere in the computer software system 40. Optionally, the user may be prompted to resolve failure of functionality or approve the changes to functionality elsewhere via the user interface 50 before the changes are effected.

Optionally, the system 10 includes a data repository such as a database 13 that records interaction and/or instructed changes via the user interface 50. The database 13 is preferably accessible by the user, enabling pausing of modification via the user interface 50 and resumption at a later date and/or access to prior changes and rolling the changes back.

The system 10 may include a user-selectable option of simulating the changes requested. For example, it may output the simulation via the user interface for user approval. It may also submit the changes to an automated testing environment such as that described in the applicants' earlier patent No. US 10572360.

It will be appreciated that although the above embodiment focuses on changes to existing functionality or visual appearance, it will be appreciated that new functionality or visual appearance can be defined and implemented in this way, for example customising a generic out-of-the-box environment or adding new aspects to an existing computer software system.

Embodiments may be implemented via an Artificially Intelligent Chat Bot (a "Requirements Bot", RB).

The stakeholder interacts with the RB, either through speech-to-text recognition/conversation or by the stakeholder typing into a chat box function.

The RB interprets the stakeholder's answers and ask a series of guided questions which will allow the functional and non-functional requirement to be fully defined, leaving no gaps or missed questions.

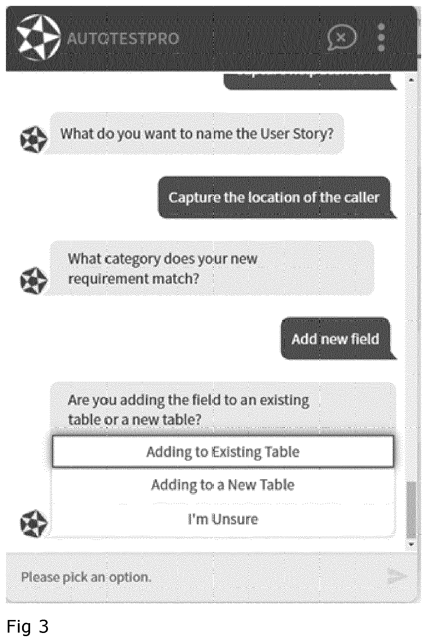

An example excerpt from a stakeholder's interaction with the RB is shown in Figure 3.

Where possible, the RB will integrate the underlying database of the computer software system 40 being analysed, in order to provide wizard style choices and drop down selections of available responses (avoiding errors and omissions in responses).

The RB questions and decision tree for follow on questions are preferably held in a database. Preferably, these are in a template form and selected based on the content of the database and also on the stakeholder's prior decisions. A full tree modelling each possible modification from end-to-end is not needed, simply templates reflecting possible changes/actions that can be customised and used for interaction with the stakeholder.

Preferably, for all questions, the stakeholder is able to answer 'Don't know'. This response is captured in the database against the relevant question. A report can be produced from the database indicating where the stakeholder or other party such as a Business Analyst needs to go and find out the answer to the question that was not known during the RB interaction with the stakeholder.

The user is able to produce reports, documentation and common SDLC deliverables from the responses to the questions. E.g. Functional and Non-functional Requirements document, Design Documents, Acceptance Test Document, Test Plan Document, Desired end-state models etc. These documents may be in the form of PDFs, Word, Excel , CSV etc.

A typical requirements document is shown below.

Optionally, the stakeholder has the option of creating records in a database (from the captured responses), the database may be used for defining or executing current or future automated tests, once the development work is completed.

At the end of the stakeholder's interaction with the RB, the RB may speak back the requirements in detailed or summary form, for the stakeholder to confirm the correct responses have been captured. The stakeholder is then able to amend their responses until they are satisfied that their requirements have been correctly captured.

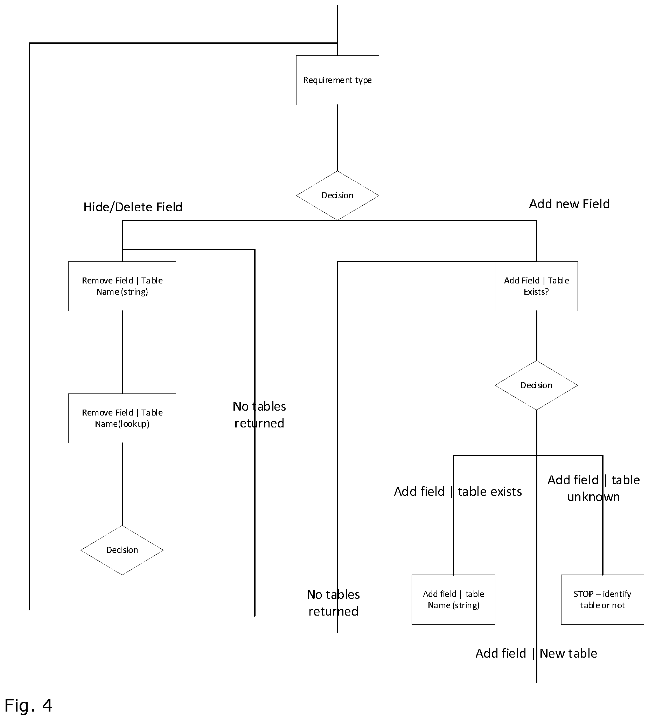

An example design for RB questions is shown in Figure 4.

In preferred embodiments, requirements for changes to a SaaS/PaaS are captured by the user interface 50 in a comprehensive and structured form that can be passed to an automation engine or Automation Bot, such that configuration changes be made automatically to the SaaS/PaaS platform, without the need for a human developer to make the configuration changes. Effectively creating a 'Developer Bot'.

Configuration changes of varying complexity such as adding a field onto a form and making it mandatory could, for example, be made by the Developer Bot.

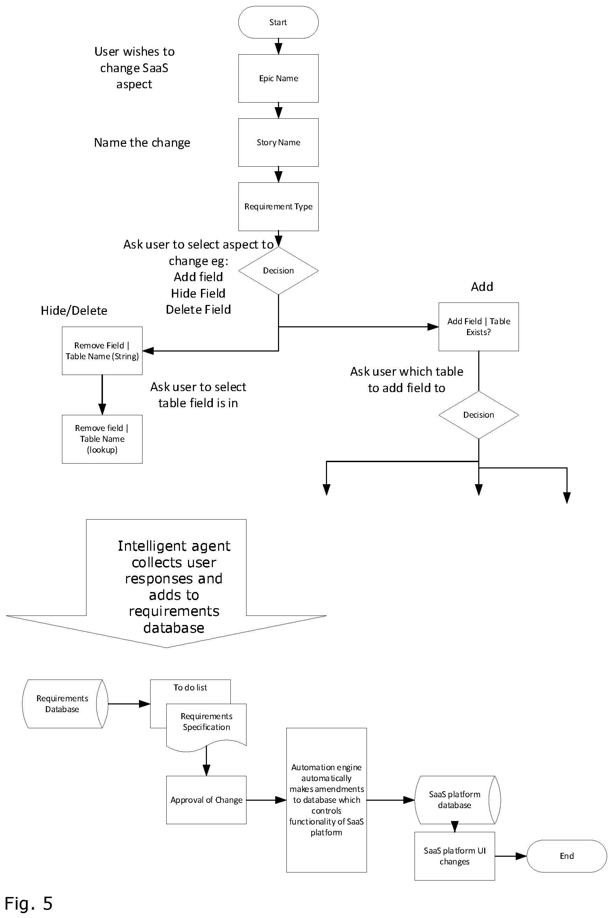

A more detailed example of operation of an embodiment of the present invention is shown in Figure 5. In this example, a user is making a change to a user interface. After obtaining a name for the change for system reference, the system guides the user through the options for the change (options here are add a new field, hide an existing field or delete a field but there could be many others and they could be split into groups or a free-speech/entry interface could intelligently direct the user to the most appropriate change based on request. The logic flow for the changes then directs the user for further inputs/decisions needed.

Once the information needed to make the change has been collected, the system them moves to apply it as shown in the lower section of the diagram- note that the changes may not be collected in one session or even from one user -some information may be flagged as needed and the change saved or referred elsewhere to collect that information or make a decision.

It is to be appreciated that certain embodiments of the invention as discussed below may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

Optional embodiments of the invention can be understood as including the parts, elements and features referred to or indicated herein, individually or collectively, in any or all combinations of two or more of the parts, elements or features, and wherein specific integers are mentioned herein which have known equivalents in the art to which the invention relates, such known equivalents are deemed to be incorporated herein as if individually set forth.

Although illustrated embodiments of the present invention have been described, it should be understood that various changes, substitutions, and alterations can be made by one of ordinary skill in the art without departing from the present invention which is defined by the recitations in the claims and equivalents thereof.

## Claims

1. A computer-implemented software modification method comprising:
accessing, from a data repository, definition data defining an aspect of a computer software system, the definition data being used during execution of the computer software system, the aspect comprising one or more of functionality and visual appearance of the computer software system;
automatically generating a user interface in dependence on the definition data;
executing the user interface and receiving, from a user, modification instructions for the aspect of the computer software system; and, generating, from the modification instructions, changes to the computer software system.

2. The computer implemented method of claim 1, further comprising pre-processing the computer software system to identify a plurality of the aspects, the user interface being configured to receive a selection from a user selecting one of the aspects for modification.

3. The computer implemented method of claim 1 or 2, wherein the step of generating the user interface comprising configuring a natural language chat-bot to guide the user through modification of the aspect.

4. The computer implemented method of claim 1, 2 or 3, wherein the step of generating the user interface further comprises accessing a natural language database and populating natural language queries from the database with the definition data to generate a user interface in user understandable natural language.

5. The computer implemented method of claim 4, wherein the natural language queries comprise questions and decision tree for follow on questions to be posed to the user.

6. The computer implemented method of any preceding claim, further comprising building a change request over time including storing changes requested via the user interface, highlighting information needed to make the requested change and inhibiting an option in the user interface to make the changes until all needed information has been provided.

7. The computer implemented method of any preceding claim, further comprising displaying, via the user interface a simulation of the changes requested and seeking approval, via the user interface, of the simulated changes.

8. The computer implemented method of any preceding claim, further comprising alerting the user, via the user interface, when the changes cause changes to, or failure of, functionality elsewhere in the computer software system.

9. The computer implemented method of any preceding claim, further comprising storing, in a change database, the changes made to the computer system, the step of generating a user interface including displaying the changes from the change database and providing a user control to pause or roll back a change selected from the changes displayed from the change database.

10. A computer implemented software modification system comprising:
a data repository interface configured to access a data repository encoding definition data defining an aspect of a computer software system, the definition data being used during execution of the computer software system, the aspect comprising one or more of functionality and visual appearance of the computer software system;
a processor configured to execute computer program code for executing a software modification system, including:
computer program code configured to automatically generate a user interface in dependence on the definition data;
computer program code configured to execute the user interface and receive, from a user, modification instructions for the aspect of the computer software system; and,
computer program code configured to generate, from the modification instructions, changes to the computer software system.

11. The computer implemented software modification system of claim 10, further comprising computer program code configured to generate a natural language chat-bot to guide the user through modification of the aspect.

12. The computer implemented software modification system of claim 10, further comprising computer program code configured to access a natural language database and populate natural language queries from the database with the definition data to generate the user interface in user understandable natural language.

13. The computer implemented software modification system of claim 12, wherein the natural language queries are stored in the natural language database as a decision tree of template questions to be populated from the definition data and to be posed to the user.

14. The computer implemented software modification system of any of claims 10 to 13, further comprising computer program code configured to build a change request over time, to store changes requested via the user interface, highlight information needed to make the requested change and inhibit an option in the user interface to make the changes until all needed information has been provided.

15. The computer implemented software modification system of any of claims 10 to 14, further comprising computer program code configured to display, via the user interface a simulation of the changes requested and seek approval, via the user interface, of the simulated changes.
